# FASCICULE DE BREVET EUROPEEN

(11) **EP 0 469 106 B1**
(45) Date de publication et mention de la délivrance du brevet: **15.01.1997**
(21) Numéro de dépôt: 91903324.1
(22) Date de dépôt: 21.02.1991
(51) Int. Cl.: H04N 7/167

(54) **PROCEDE D'EMBROUILLAGE ET DE DESEMBROUILLAGE D'UN SIGNAL VIDEO**
VIDEOSIGNAL-VERWÜRFELUNGS- UND ENTWÜRFELUNGSVORRICHTUNG
VIDEO SIGNAL SCRAMBLING AND UNSCRAMBLING DEVICE

(30) Priorité: 21.02.1990 CH 563/90
(43) Date de publication de la demande: 05.02.1992
(73) Titulaire: NAGRA PLUS S.A., CH-1033 Cheseaux-sur-Lausanne (CH)
(72) Inventeur: KUDELSKI, André, CH-1023 Crissier (CH)
(74) Mandataire: Cronin, Brian Harold John
(86) Numéro de dépôt international: CH9100042
(87) Numéro de publication internationale: WO9113517

(56) Documents cités:
- EP-A- 0 260 886
- EP-A- 0 309 984
- EP-A- 0 325 509
- US-A- 4 405 942
- US-A- 4 673 975
- International Journal of Electronics, vol. 59, no. 4, octobre 1985, (Londres, GB), V. Zacharopoulos et al.: "An analogue scrambling scheme for television signals", pages 501-509

## Description

La présente invention concerne un procédé d'embrouillage et de désembrouillage d'un signal vidéo et trouve son application principalement dans les systèmes de télévision à péage pour lesquels il est essentiel d'embrouiller l'émission vidéo et de désembrouiller ou décoder l'émission chez le souscripteur qui est muni d'un décodeur approprié et qui dispose du droit de regarder l'émission diffusée.

On connaît un certain nombre de procédés d'embrouillage et de désembrouillage correspondant visant à rendre incompréhensible l'image et/ou le son émis ou en rendant leur vision et/ou leur audition inconfortable.

Un procédé connu consiste, au niveau de l'émission, à embrouiller des séquences du signal vidéo, selon une fonction d'embrouillage qui consiste à diffuser successivement les lignes de l'image vidéo selon un ordre différent de l'ordre normal correspondant à l'image en clair puis, au niveau de la réception, à recevoir le signal vidéo embrouillé dans une mémoire de stockage, et à désembrouiller les séquences du signal vidéo diffusé.

On connait par exemple un procédé d'embrouillage consistant à permuter un certain nombre constant de lignes de l'image vidéo, selon une fonction de permutation déterminée. Dans ce cas, le désembrouillage consiste à effectuer la fonction inverse de celle utilisée au niveau de l'émission pour permuter ce certain nombre de lignes d'image. Comme il n'est pas techniquement facile de permuter ainsi un grand nombre de lignes d'image, on se limite actuellement à environ 32 lignes permutées. Un tel procédé est connu du document US-A-4 405 942.

Ce procédé dit "de permutation à blocs fixes" présente l'inconvénient de nécessiter une mémoire de grande taille la réception, parce que, au moment de la fin de l'envoi sur le téléviseur, pour pouvoir envoyer immédiatement la suite de l'image, il faut disposer d'une séquence des 32 lignes mémorisées suivantes. Ce procédé est relativement simple à mettre en oeuvre au niveau de l'émission, mais des problèmes de fiabilité, de sécurité et de coût se posent au niveau de la réception, vu le grand nombre de décodeurs. Par ailleurs, ce procédé manque de sécurité contre certaines formes de piratage. Il est en effet possible de retrouver l'ordre des permutations, même si cet ordre change fréquemment au cours de l'émission.

On voit que dans l'exemple ci-dessus, la fonction de désembrouillage est quasiment la même que la fonction d'embrouillage, puisque les deux fonctions sont de même nature et sont réciproques. Ceci est également le cas dans le procédé du document US-A-4 405 942. Cette fonction est par ailleurs simple à pirater parce qu'elle est indépendante de tout autre paramètre ou de toute autre information.

EP-A-0 243 312 décrit un décodeur pour un système de télévision à péage comprenant une mémoire agencée pour recevoir un signal vidéo embrouillé par permutation des lignes, et des moyens pour débrouiller le signal vidéo mémorisé selon un code de débrouillage variable. Cette mémoire du décodeur est constituée par un buffer de lignes où les échantillons du signal vidéo embrouillé sont introduits séquentiellement dans des cellules successives, chaque ligne du buffer étant constituée d'autant de cellules que nécessaire pour stocker le nombre d'échantillons d'une ligne du signal vidéo. Dans cette mémoire, l'entrée de chaque échantillon dans une cellule du buffer provoque la sortie de cette cellule de l'échantillon mémorisé déjà présent dans cette même cellule, l'ordre de sortie des lignes du buffer mémorisées pour effectuer le débrouillage était déterminé par la sélection, sous commande du code de débrouillage, parmi les lignes du buffer, de celles qui permettent la dé-permutation des lignes. Dans l'exemple décrit, le décodeur comporte un système de déchiffrage d'une carte CPTV délivrant un mot de code déchiffré, et un générateur de pseudo-hasard qui délivre des pointeurs à une table contenant un nombre de codes de permutation. Cette table de permutation sélectionne parmi les lignes du buffer celles que permettent la dé-permutation.

Donc, la mémoire de stockage du décodeur de EP-A-0 243 312 comporte un nombre déterminé de lignes de mémoire, chaque ligne de mémoire pouvant stocker une ligne d'image reçue, de manière à ce que le stockage d'une ligne d'image provoque la sortie de la ligne d'image précédemment stockée, selon une fonction de déchiffrage réalisée à la réception.

La présente invention vise à éviter les inconvénients qui viennent d'être cités, c'est-à-dire d'augmenter la fiabilité et la sécurité du procédé au niveau de la réception, tout en permettant de réduire la taille de mémoire et/ou la complexité de chaque décodeur, donc le coût.

Donc, dans ce but, le procédé selon l'invention est caractérisé en ce que chaque ligne d'image émise est adressée, à l'émission, vers une ligne de mémoire à la réception telle que son stockage dans la ligne à laquelle elle est adressée provoque la sortie de la ligne précédemment stockée dans cette ligne de mémoire au bon instant ou selon le bon ordre pour permettre de restituer l'image en clair.

A cette fin, selon l'invention, la fonction d'embrouillage à l'émission consiste :
- à déterminer pour chaque ligne d'image diffusée, l'adresse de la ligne de mémoire de la mémoire de stockage dans laquelle cette ligne d'image diffusée doit être stockée selon un ordre qui est différent de l'ordre normal correspondant à l'image en clair; et
- à déterminer l'instant ou l'ordre d'émission de cette ligne d'image pour que, à la réception, cette ligne d'image provoque, par son stockage dans la ligne de mémoire où elle est adressée, la sortie de la ligne d'image stockée préalablement à la même adresse, au bon instant ou selon le bon ordre pour permettre de restituer l'image en clair.

Une forme de réalisation du procédé d'embrouillage à l'émission consiste :
- à affecter, à chaque ligne d'image d'une trame produite en clair avant son embrouillage, un numéro d'identification, ainsi que l'adresse déterminée de façon pseudo-aléatoire de la ligne de mémoire de la mémoire de stockage dans laquelle cette ligne d'image sera stockée à la réception;
- à maintenir en permanence une table de correspondance entre, d'une part, le numéro d'identification de chaque ligne d'image d'au moins une trame de l'émission produite en clair avant son embrouillage et, d'autre part, son adresse de stockage dans la mémoire de stockage à la réception;
- à agencer un nombre de piles égal au nombre de lignes de mémoire de la mémoire de stockage utilisée à la réception, chaque pile correspondant à une ligne de mémoire de la mémoire de stockage;
- à empiler dans chaque pile successivement le numéro d'identification de chaque ligne d'image qui sera adressée à la ligne de mémoire correspondante de la mémoire de stockage lors de réception de la trame, en commençant par la dernière ligne de la trame et en empilant ainsi jusqu'à la première ligne de la trame; puis
- lorsque toutes les piles sont ainsi constituées pour la trame, à procéder au désempilement de chaque pile en commençant par le numéro d'identification empilé en premier et déterminer, pour chaque ligne d'image dont le numéro d'identification est ainsi extrait d'une pile par ledit désempilement, l'instant ou l'ordre de sa diffusion, cet instant ou cet ordre de diffusion étant celui correspondant à l'instant ou à l'ordre où la ligne d'image dont le numéro d'identification est situé dans la même pile juste au-dessus de celui que l'on désempile doit sortir de. la mémoire de stockage pour permettre de restituer l'image en clair.

De préférence, avant leur émission, les trames sont stockées dans une mémoire située à l'émission et déchargées de cette mémoire selon un ordre correspondant à l'instant ou à l'ordre d'émission déterminé.

L'invention concerne aussi un système d'embrouillage et de désembrouillage d'un signal vidéo ainsi qu'un dispositif pour le stockage et le désembrouillage d'un signal vidéo embrouillé selon le procédé de l'invention utilisant, à la réception, un décodeur pourvu d'une mémoire.

La présente invention sera mieux comprise en se référant à la description d'un exemple de réalisation qui va suivre et aux dessins annexés dans lesquels :
- la figure 1 représente le mode de stockage dans un buffer du décodeur, selon la présente invention;
- la figure 2 représente un moyen pour effectuer le procédé d'embrouillage selon la présente invention;
- la figure 3 représente un schéma synoptique d'un dispositif pour la mise en oeuvre de l'invention; et
- la figure 4 représente une partie du dispositif pour la mise en oeuvre de l'invention.

Une ligne d'image numérisée comprend classiquement un grand nombre, par exemple 256 ou 512, d'échantillons numérisés, mais pour simplifier, on a représenté dans les figures seulement huit échantillons a,b,c,d,e,f,g,h.

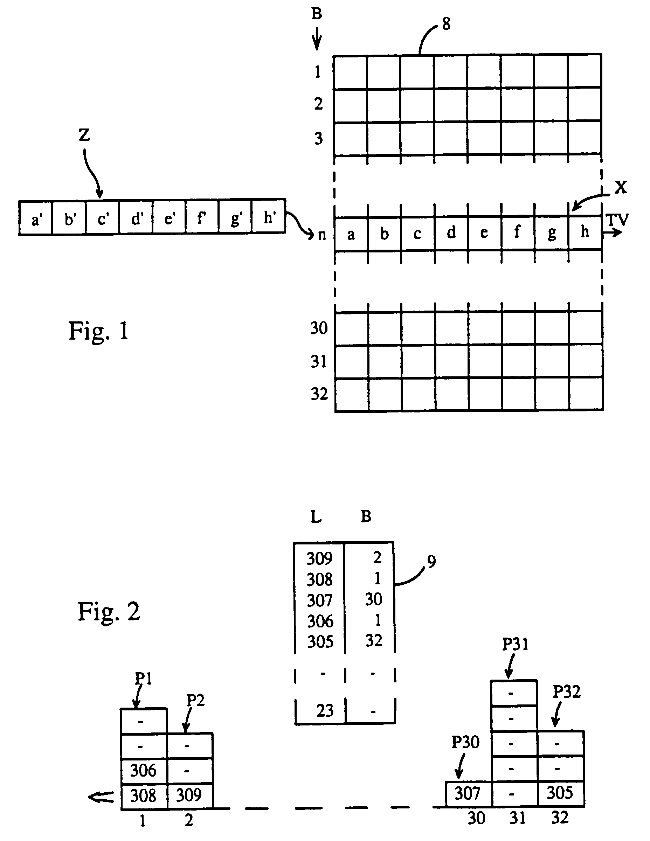

En figure 1, on a représenté un mode d'adressage et de stockage des lignes d'image embrouillées reçues au décodeur d'un souscripteur. On distingue une mémoire de stockage 8, appelée communément un buffer, comprenant par exemple 32 lignes de mémoire, chaque ligne pouvant stocker les informations numérisées d'une ligne d'image entière.

Selon le procédé de l'invention, une ligne Z diffusée vient remplacer dans le buffer 8 une ligne X précédente située dans la même ligne de mémoire n du buffer 8. Le stockage de la ligne d'image Z dans la ligne de mémoire n du buffer 8 provoque la sortie de la ligne d'image précédente X et son envoi sur le téléviseur, éventuellement après remise en forme ou annulation de rotation (à cet égard, voir la demande de brevet européenne 91810115.5 EP-A-0 443 987 publiée le 28.08.91). Par conséquent, l'ordre d'émission des lignes d'image est fonction de l'adresse n de chacune de ces lignes, puisque chaque ligne Z ne sera diffusée que lorsqu'elle viendra en remplacement, dans la ligne de mémoire du buffer correspondant à son adresse, d'une ligne précédente X seulement à l'instant où la ligne précédente devra être envoyée sur le téléviseur.

On voit donc que l'ordre d'émission des lignes n'est pas simplement permuté arbitrairement mais résulte d'une combinaison avec l'adresse de chaque ligne d'image dans le buffer présent dans le dispositif de réception. La fonction d'embrouillage par permutation des lignes d'image est donc relative et non absolue.

Selon une forme de réalisation de l'invention et en se reportant à la figure 2, au niveau de l'émission, le procédé d'embrouillage consiste :
a) à maintenir à jour en permanence une table de correspondance entre le numéro d'identification (repère) L de chaque ligne d'image d'au moins une trame de l'émission produite en clair avant son embrouillage et son adresse B de stockage dans la mémoire de stockage 8 à la réception;
b) à éliminer de cette table les lignes d'image lorsqu'elles sont finalement envoyées sur le téléviseur, afin de pouvoir constituer une table suivante;
c) à agencer un nombre (dans cet exemple, 32) de piles P1 à P32 égal au nombre de lignes de mémoire de la mémoire de stockage (ou buffer) 8 utilisée à la réception, et à donner à chaque pile une référence identique au numéro d'identification de la ligne de mémoire qui lui correspond;
d) à empiler dans chaque pile P, successivement le numéro d'identification de chaque ligne d'image qui sera adressée à la ligne de mémoire correspondante de la mémoire 8 lors de la réception de la ou des trames, en commençant par la dernière ligne de la ou des trames (dans cet exemple 309, 308, 307, 306, 305, ... 23) et en empilant ainsi jusqu'à la première ligne de la première trame (dans cet exemple, la première ligne est la ligne 23) ; (dans une trame vidéo on désigne classiquement les lignes actives d'une trame par les repères allant de 23 à 309);
e) puis, lorsque toutes les piles sont ainsi constituées pour la ou les trames, à procéder au désempilement de chaque pile (de P1 à P32) en commençant par le bas de la pile (dans cet exemple, pour la première pile P1, on commence donc par extraire 308, puis 306, etc...), et à déterminer, pour chaque ligne d'image dont le numéro d'identification est ainsi extrait d'une pile par ledit désempilement (par exemple pour la ligne 308), l'instant de sa diffusion, cet instant de diffusion étant celui correspondant à l'instant où la ligne d'image située dans la même pile juste au-dessus de celle que l'on désempile doit être envoyée sur le téléviseur pour former l'image en clair (dans cet exemple pour la ligne 308, l'instant de diffusion de cette ligne 308 est celui pour lequel la ligne 306 doit être envoyée sur le téléviseur pour former l'image en clair);
f) on peut arranger alors, dans une mémoire de grande taille à l'émission, toutes les lignes d'image de la ou des trames en fonction de l'instant où chacune devra être diffusée, et lorsque l'on a ainsi arrangé toutes les lignes de la ou des trames il suffit de diffuser les lignes d'image selon leur arrangement dans cette mémoire.

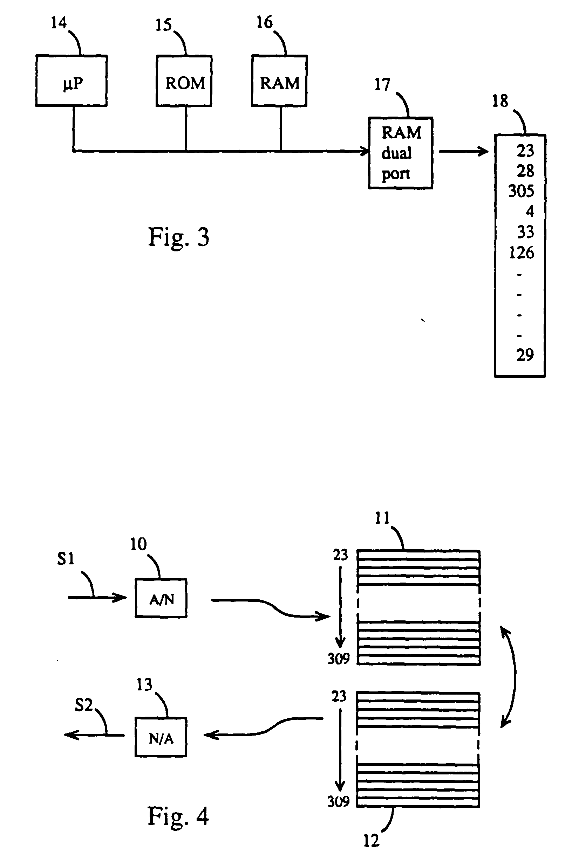

Un exemple de dispositif pour la mise en oeuvre de ce procédé d'embrouillage est illustré de façon schématique dans la figure 3. Dans cette figure, on distingue un microprocesseur (µp) 14, une mémoire vive (RAM) 16 et une mémoire morte (ROM) 15. La mémoire morte 16 contient un programme de traitement logique permettant de mettre en oeuvre les opérations logiques à effectuer dans le microprocesseur 14, ces opérations logiques correspondant au procédé décrit précédemment en rapport à la figure 2. La mémoire vive 16 sert à stocker les données variables au cours du déroulement de programme. Une telle disposition est classique. Cet ensemble produit en sortie, par l'intermédiaire d'une mémoire vive à port dual 17, la suite des numéros de ligne d'image (dans cet exemple la suite 23, 28, 305, ... 29) correspondant à la suite des lignes d'image telles qu'elles doivent être successivement diffusées de façon à reconstituer à la réception l'image en clair dans un décodeur qui reçoit simultanément un code correspondant de désembrouillage.

La figure 4 illustre un mode de réalisation particulier d'une autre partie du dispositif pour la mise en oeuvre du procédé selon l'invention. Dans cette partie, on distingue une voie d'entrée S1 fournissant l'image en clair fournie dans la station émettrice. Cette image est numérisée au travers d'un convertisseur analogique-numérique 10, et est stockée selon des lignes successives (par exemple les lignes de trame 23 à 309) dans un buffer 11. Pendant ce stockage, un autre buffer identique 12 dans lequel a été stockée une trame précédente est déchargé selon un ordre de déchargement des lignes (23 à 309) qui est déterminé selon le procédé d'embrouillage de l'invention (à l'aide du dispositif de la figure 3), et chaque ligne déchargée passe à travers un convertisseur numérique-analogique 13 avant d'être diffusée, la diffusion S2 étant brouillée du fait que les lignes ne sont pas émises dans l'ordre naturel (lignes 23, 24, ...309).

On peut aussi utiliser trois buffers, par exemple un buffer 11 et deux buffers 12, au lieu des deux buffers 11 et 12, afin de disposer de temps pendant le passage d'un buffer au suivant.

## Revendications

1. Procédé d'embrouillage et de désembrouillage d'un signal vidéo consistant, au niveau de l'émission, à embrouiller des séquences du signal vidéo selon une fonction d'embrouillage qui consiste à diffuser successivement les lignes de l'image vidéo selon un ordre différent de l'ordre normal correspondant à l'image en clair puis, au niveau de la réception, à recevoir le signal vidéo embrouillé dans une mémoire de stockage (8), et à désembrouiller les séquences du signal vidéo diffusé, la mémoire de stockage (8) comportant un nombre déterminé de lignes de mémoire, chaque ligne de mémoire pouvant stocker une ligne d'image reçue, de manière à ce que le stockage d'une ligne d'image provoque la sortie de la ligne d'image précédemment stockée, dans cette ligne de mémoire
caractérisé en ce que chaque ligne d'image émise est adressée, à l'émission, vers une ligne de mémoire à la réception, telle que son stockage dans la ligne à laquelle elle est adressée provoque la sortie de la ligne précédemment stockée dans cette ligne de mémoire au bon instant ou selon le bon ordre pour permettre de restituer l'image en clair.

2. Procédé selon la revendication 1, caractérisé en ce que la fonction d'embrouillage à l'émission consiste :
- à déterminer pour chaque ligne d'image diffusée, l'adresse (B) de la ligne de mémoire de la mémoire de stockage dans laquelle cette ligne d'image diffusée doit être stockée selon un ordre qui est différent de l'ordre normal correspondant à l'image en clair; et
- à déterminer l'instant ou l'ordre d'émission de cette ligne d'image pour que, à la réception, cette ligne d'image provoque, par son stockage dans la ligne de mémoire où elle est adressée, la sortie de la ligne d'image stockée préalablement à la même adresse, au bon instant ou selon le bon ordre pour permettre de restituer l'image en clair.

3. Procédé selon la revendication 2, caractérisé en ce que le procédé d'embrouillage à l'émission consiste :
- à affecter, à chaque ligne d'image d'une trame produite en clair avant son embrouillage, un numéro d'identification (23 à 309), ainsi que l'adresse (B) déterminée de façon pseudo-aléatoire de la ligne de mémoire de la mémoire de stockage (8) dans laquelle cette ligne d'image sera stockée à la réception;
- à maintenir en permanence une table de correspondance (9) entre, d'une part, le numéro d'identification (23 à 309) de chaque ligne d'image d'au moins une trame de l'émission produite en clair avant son embrouillage et d'autre part son adresse de stockage (B) dans la mémoire de stockage (8) à la réception;
- à agencer un nombre de piles (P1 à P32) égal au nombre de lignes de mémoire de la mémoire de stockage (8) utilisée à la réception, chaque pile correspondant à une ligne de mémoire de la mémoire de stockage (8);
- à empiler dans chaque pile successivement le numéro d'identification de chaque ligne d'image qui sera adressée à la ligne de mémoire correspondante de la mémoire de stockage (8) lors de réception de la trame, en commençant par la dernière ligne (309) de la trame et en empilant ainsi jusqu'à la première ligne (23) de la trame; puis
- lorsque toutes les piles (P1 à P32) sont ainsi constituées pour la trame, à procéder au désempilement de chaque pile en commençant par le numéro d'identification empilé en premier (308 pour P1) et déterminer, pour chaque ligne d'image dont le numéro d'identification est ainsi extrait d'une pile par ledit désempilement, l'instant ou l'ordre de sa diffusion, cet instant ou cet ordre de diffusion étant celui correspondant à l'instant ou l'ordre où la ligne d'image dont le numéro d'identification est situé dans la même pile juste au-dessus de celui que l'on désempile doit sortir de la mémoire de stockage (8) pour permettre de restituer l'image en clair.

4. Procédé selon la revendication 3, caractérisé en outre en ce que, avant leur émission, les trames sont stockées dans une mémoire (12) située à l'émission et déchargées de cette mémoire (12) selon un ordre correspondant à l'instant ou à l'ordre d'émission déterminé.

5. Système d'embrouillage et de désembrouillage d'un signal vidéo comportant une station d'émission agencée pour embrouiller des séquences du signal vidéo selon une fonction d'embrouillage qui consiste à diffuser successivement les lignes de l'image vidéo selon un ordre différent de l'ordre normal correspondant à l'image en clair, et des dispositifs de réception agencés pour recevoir le signal vidéo embrouillé dans une mémoire de stockage (8) et pour désembrouiller les séquences du signal vidéo diffusé, chaque mémoire de stockage à la réception comprenant un nombre déterminé de lignes de mémoire, chaque ligne de mémoire pouvant stocker une ligne d'image reçue de manière à ce que le stockage d'une ligne d'image provoque la sortie de la ligne d'image précédemment stockée, caractérisé en ce que chaque ligne d'image reçue est adressée à l'émission vers une ligne de mémoire à la réception telle que son stockage dans la ligne à laquelle elle est adressée provoque la sortie de la ligne précédemment stockée dans cette ligne de mémoire au bon instant ou selon le bon ordre pour permettre de restituer l'image en clair.

6. Dispositif pour le stockage et le désembrouillage d'un signal vidéo embrouillé selon le procédé de l'une quelconque des revendications 1 à 4 utilisant, à la réception, un décodeur pourvu d'une . mémoire comprenant un nombre déterminé de lignes de mémoire, chaque ligne de mémoire pouvant stocker une ligne d'image reçue de manière à ce que le stockage d'une ligne d'image provoque la sortie de la ligne d'image précédemment stockée, caractérisé en ce que la mémoire du décodeur est agencée de manière à recevoir chaque ligne d'image émise adressée à une ligne de mémoire telle que son stockage dans la ligne à laquelle elle est adressée selon l'adresse établie à l'émission provoque la sortie de la ligne précédemment stockée dans cette ligne de mémoire au bon instant ou selon le bon ordre pour permettre de restituer l'image en clair.

## Patentansprüche

1. Verfahren zur Verwürfelung und Auflösung eines Videosignals, bestehend darin, daß in der Ebene des Sendens Folgen des Videosignals gemäß einer Verwürfelungsfunktion verwürfelt werden, die darin besteht, nacheinander die Zeilen des Videobildes gemäß einer Reihenfolge verschieden von der normalen Reihenfolge entsprechend dem unverschlüsselten Bild zu senden, dann in der Ebene des Empfangs das verwürfelte Videosignal in einen Speicher (8) aufgenommen wird und die Folgen des gesendeten Videosignals aufgelöst werden, wobei der Speicher (8) eine bestimmte Zahl von Speicherzeilen umfaßt, wobei jede Speicherzeile eine empfangene Bildzeile speichern kann derart, daß die Speicherung einer Bildzeile die Ausgabe der zuvor in dieser Speicherzeile gespeicherten Bildzeile bewirkt,
dadurch gekennzeichnet, daß jede gesendete Bildzeile beim Senden zu einer Speicherzeile beim Empfang adressiert ist, so wie ihre Speicherung in der Zeile, auf die sie adressiert ist, die Ausgabe der in dieser Speicherzeile zuvor gespeicherten Zeile im geeigneten Zeitpunkt oder gemäß der geeigneten Reihenfolge bewirkt, um die Wiederherstellung des unverschlüsselten Bildes zu gestatten.

2. Verfahren nach Anspruch 1, dadurch gekennzeichnet, daß die Verwürfelungsfunktion beim Senden darin besteht, daß:
- für jede gesendete Bildzeile die Adresse (B) der Speicherzeile des Speichers bestimmt wird, in der diese gesendete Bildzeile gemäß einer Reihenfolge gespeichert werden soll, die von der normalen Reihenfolge entsprechend dem unverschlüsselten Bild verschieden ist; und
- der Zeitpunkt oder die Sendereihenfolge dieser Bildzeile bestimmt wird, damit diese Bildzeile beim Empfang durch ihre Speicherung in der Speicherzeile, wo sie adressiert ist, die Ausgabe der vorhergehend bei derselben Adresse gespeicherten Bildzeile zum geeigneten Zeitpunkt oder gemäß der geeigneten Reihenfolge bewirkt, um die Wiederherstellung des unverschlüsselten Bildes zu gestatten.

3. Verfahren nach Anspruch 2, dadurch gekennzeichnet, daß das Verwürfelungsverfahren beim Senden darin besteht, daß:
- jeder Bildzeile eines vor seiner Verwürfelung erzeugten unverschlüsselten Teilbildes eine Identifizierungsnummer (23 bis 309) sowie die auf pseudozufällige Weise bestimmte Adresse (B) der Speicherzeile des Speichers (8) zugeordnet wird, in der diese Bildzeile beim Empfang gespeichert wird;
- permanent eine Zuordnungstabelle (9) zwischen einerseits der Identifizierungsnummer (23 bis 309) jeder Bildzeile wenigstens eines Teilbildes der Sendung, das unverschlüsselt vor seiner Verwürfelung erzeugt worden ist, und anderseits seiner Speicheradresse (B) im Speicher (8) beim Empfang beibehalten wird;
- eine Anzahl von Speicherblöcken (P1 bis P32) gleich der Anzahl der Speicherzeile des beim Empfang verwendeten Speichers (8) eingerichtet wird, wobei jeder Speicherblock einer Speicherzeile des Speichers (8) entspricht;
- in jedem Speicherblock nacheinander die Identifizierungsnummer jeder Bildzeile angehäuft wird, die bei der Speicherzeile entsprechend dem Speicher (8) zur Zeit des Empfangs des Teilbildes adressiert wird, wobei mit der letzten Zeile (309) des Teilbildes begonnen wird und so bis zur ersten Zeile (23) des Teilbildes angehäuft wird; dann
- wenn sämtliche Speicherblöcke (P1 bis P32) so für das Teilbild gebildet sind, zur Entstapelung jedes Speicherblocks fortgeschritten wird, wobei mit der als erstes (308) für P1 angehäuften Identifizierungsnummer begonnen wird und für jede Bildzeile, deren Identifizierungsnummer so aus einem Speicherblock durch die Entstapelung extrahiert wird, der Zeitpunkt oder die Reihenfolge ihrer Sendung bestimmt wird, wobei dieser Zeitpunkt oder diese Sendereihenfolge diejenige entsprechend dem Zeitpunkt oder der Reihenfolge ist, zu der die Bildzeile, deren Identifizierungsnummer sich in demselben Speicherblock gerade über derjenigen befindet, die entstapelt wird, aus dem Speicher (8) austreten soll, um die Wiederherstellung des unverschlüsselten Bildes zu gestatten.

4. Verfahren nach Anspruch 3, dadurch gekennzeichnet, daß außerdem die Teilbilder vor ihrer Sendung in einem beim Senden befindlichen Speicher (12) gespeichert werden und gemäß einer Reihenfolge entsprechend dem Zeitpunkt oder der bestimmten Sendereihenfolge aus diesem Speicher (12) geladen werden.

5. System zur Verwürfelung und Auflösung eines Videosignals, umfassend eine Sendestation, die angeordnet ist, um Folgen des Videosignals gemäß einer Verwürfelungsfunktion zu verwürfeln, die darin besteht, nacheinander die Zeilen des Videobildes gemäß einer Reihenfolge verschieden von der normalen Reihenfolge entsprechend dem unverschlüsselten Bild zu senden, und Empfangsvorrichtungen, die angeordnet sind, um das verwürfelte Videosignal in einem Speicher (8) aufzunehmen und die Folgen des gesendeten Videosignals aufzulösen, wobei jeder Speicher beim Empfang eine bestimmte Anzahl von Speicherzeilen umfaßt, wobei jede Speicherzeile eine empfangene Bildzeile speichern kann derart, daß die Speicherung einer Bildzeile die Ausgabe der zuvor gespeicherten Bildzeile bewirkt, dadurch gekennzeichnet, daß jede empfangene Bildzeile beim Senden zu einer Speicherzeile beim Empfang adressiert wird derart, daß ihre Speicherung in der Zeile, bei der sie adressiert ist, die Ausgabe der zuvor in dieser Speicherzeile gespeicherten Zeile zum geeigneten Zeitpunkt oder gemäß der geeigneten Reihenfolge bewirkt, um die Wiederherstellung des unverschlüsselten Bildes zu gestatten.

6. Vorrichtung zur Speicherung und Auflösung eines verwürfelten Videosignals gemäß dem Verfahren eines beliebigen der Ansprüche 1 bis 4, bei der beim Empfang ein Decodierer verwendet wird, der mit einem eine bestimmte Speicherzeilenzahl umfassenden Speicher versehen ist, wobei jede Speicherzeile eine empfangene Bildzeile speichern kann derart, daß die Speicherung einer Bildzeile die Ausgabe der zuvor gespeicherten Bildzeile bewirkt, dadurch gekennzeichnet, daß der Speicher des Decodierers so angeordnet ist, daß er jede gesendete Bildzeile adressiert zu einer Speicherzeile empfängt derart, daß ihre Speicherung in der Zeile, in der sie adressiert ist, gemäß der beim Senden eingerichteten Adresse die Ausgabe der zuvor gespeicherten Zeile in dieser Speicherzeile zum geeigneten Zeitpunkt oder gemäß der geeigneten Reihenfolge bewirkt, um die Wiederherstellung des unverschlüsselten Bildes zu gestatten.

## Claims

1. Method for scrambling and unscrambling a video signal consisting in, at the emitting site, scrambling video signal sequences in accordance with a scrambling function which comprises successively emitting the lines of the video image according to an order different from the normal order corresponding to the intelligible image, then, at the receiving site, receiving the scrambled video signal in a storage memory (8), and unscrambling the emitted video signal sequences, the storage memory (8) comprising a determined number of memory lines, each memory line being capable of storing one received image line, so that the storage of one received image line causes the output of the previously stored image line,
characterized in that each emitted image line is addressed, at the emitting site, to a memory line at the receiving site, such that the storage thereof in the line to which it is addressed causes outputting of the line previously stored in this memory line at the right instant or in the right sequence to enable restitution of the intelligible image.

2. Method according to claim 1, characterized in that the scrambling function at the emitting site comprises the steps of :
- determining for each emitted image line, the address (B) of the line of the storage memory in which this emitted image line must be stored in an order different from the normal order corresponding to the intelligible image; and
- determining the emitting time or order of this image line so that, at the receiving site, the storage of this image line in the memory line to which it is adressed causes outputting of the image line previously stored at the same address, at the right time or in the right sequence to enable restitution of the intelligible image.

3. Method according to claim 2, characterized in that the scrambling method at the emitting site comprises the steps of :
- allocating to each image line of a picture intelligibly produced before scrambling thereof an identification number (23 to 309) as well as the pseudorandom address (B) of the memory line of storage memory (8) in which said image line will be stored at the receiving site;
- permanently maintaining a correspondence table (9) between, on the one hand, the identification number (23 to 309) of each image line of at least one picture of the intelligibly produced emission before scrambling thereof and, on the other hand, its storage address (B) in the storage memory (8) at the receiving site;
- arranging a number of stacks (P1 to P32) equal to the number of memory lines of the storage memory (8) used at the receiving site, each pile corresponding to one memory line of the storage memory;
- successively stacking in each stack the identification number of each image line which will be addressed to the corresponding memory line of the storage memory (8) during the receiving phase of said picture, beginning with the last line (309) of the picture and stacking in this manner until the first line (23) of said picture; then
- when all of the stacks (P1 to P32) for the picture are so constituted, carrying out unstacking of each stack by beginning with the first-stacked identification number (308 for P1) and determining-, for each image line whose identification number is thus extracted from a stack by said unstacking, its emitting time or its emitting order, this emitting time or order being that corresponding to the instant or the order where the image line whose identification number is situated in the same stack just above that which has just being unstacked is to be output from the memory (8) for generating the intelligible image.

4. Method according to claim 3, further characterized in that, before the emission thereeof, the picutres are stored in a memory (12) situated at the emitting site and are downloaded from this memory (12) in an order corresponding to the determined instant or order of emission.

5. A system for scrambling and unscrambling a video signal comprising an emitting site arranged to scramble video signal sequences in accordance with a scrambling function which comprises successively emitting the lines of the video image according to an order different from the normal order corresponding to the intelligible image, and receiving devices arranged to receive the scrambled video signal in a storage memory (8) and unscramble the emitted video signal sequences, each storage memory at the receiving site comprising a determined number of memory lines, each memory line being capable of storing one received image line, so that the storage of one received image line causes the output of the previously stored image line, characterized in that each emitted image line is addressed, at the emitting site, to a memory line at the receiving site, such that the storage thereof in the line to which it is addressed causes outputting of the line previously stored in this memory line at the right instant or in the right sequence to enable restitution of the intelligible image.

6. A device for storing and unscrambling a scrambled video signal according to the method of any one of claims 1 to 4 using, at the receiving site, a decoder provided with a memory having a predetermined number of memory lines, each memory line being able to store a received image line in such a manner that the storage of an image line produces the outputting of the previously stored line, characterized in that the decoder memory is arranged in such a manner as to receive each emitted image line addressed to a memory line such that the storage thereof in the line to which it is addressed according to the address established at the emitting site causes outputting of the line previously stored in this memory line at the right instant or in the right sequence to enable restitution of the intelligible image.
